# EUROPÄISCHE PATENTSCHRIFT

(11) **EP 0 928 757 B1**
(45) Veröffentlichungstag und Bekanntmachung des Hinweises auf die Patenterteilung: **17.04.2002**
(21) Anmeldenummer: 98123053.5
(22) Anmeldetag: 09.12.1998
(51) Int. Cl.: B65G 21/08

(54) **Abdeckhaube mit Inspektionsöffnung, insbesondere für Bandförderer**
Cover with inspection opening, particularly for belt conveyor
Couvercle avec ouverture d'inspection, particulièrment pour convoyeur à bande

(30) Priorität: 09.12.1997 DE 29721744 U
(43) Veröffentlichungstag der Anmeldung: 14.07.1999
(73) Patentinhaber: Achenbach GmbH Metalltechnik, 57076 Siegen (DE)
(72) Erfinder: Paul, Hans Werner, 57250 Netphen (DE)
(74) Vertreter: Reinhard - Skuhra - Weise & Partner

(56) Entgegenhaltungen:
- DE-U- 29 710 376
- GB-A- 1 518 053

## Beschreibung

Die Erfindung betrifft eine Abdeckhaube gemäß dem Oberbegriff des Patentanspruchs 1.

Bekannte Abdeckhauben, insbesondere für Förderbänder, bestehen aus Stahlwellblech, insbesondere verzinkten Stahlwellblech. Diese im wesentlichen U-förmigen Abdeckhauben werden in Form von einzelnen Abdeckhaubeneinheiten seriell hintereinander angeordnet und ergeben ein etwa tunnelförmiges Gebilde zur Abdekkung von Förderbändern oder dergleichen. Die einzelnen Abdeckhaubeneinheiten werden auf einer Stützkonstruktion, auf Schienen oder dergleichen aufgelegt und mittels Spannbändern gegenüber einer tragenden Konstruktion befestigt. Eine derartige Vorrichtung zur Befestigung von Förderband-Abdeckhauben unter Verwendung Spannbändern ist in dem DE 297 10 376 U1 beschrieben, das am 13.6.1997 angemeldet wurde.

Für Inspektionen, Reparaturen sowie zum reinen Sichten derartiger Förderbänder werden die Abdeckhauben bereichsweise mit klappbaren Hauben bzw. Sichthauben versehen. Zum Einbau solcher klappbaren Hauben bzw. Sichthauben oder Fenster ist es erforderlich, an vorgegebenen Positionen der Haubeneinheiten Einschnitte vorzusehen, um klappbare Hauben zu befestigen oder um Inspektionsöffnungen zu schaffen. Dies hat den Nachteil, daß im Bereich der Einschnitte Schwächungen der Haubeneinheiten vorliegen, daß außerdem bei der Fertigung der Haubeneinheiten Ausschnitte vorzusehen sind und daß an den kantigen Ausschnitten Verletzungsgefahr besteht. Insbesondere muß bei der Bestellung angegeben werden, an welchen Stellen die Inspektionsöffnungen vorzusehen sind, was technisch aufwendig ist und bei der Bereitstellung der Haubeneinheiten zu berücksichtigen ist.

Der Erfindung liegt die Aufgabe zugrunde, eine Abdeckhaube zu schaffen, die in einfacher Weise mit Inspektionsöffnungen versehen ist oder versehen werden kann.

Aus GB 1 518 053 A ist außerdem eine Abdeckhaube für Förderbänder bekannt, bei der die Inspektionsöffnungen mit schriebe hauben versehen sind.

Diese Aufgabe wird erfindungsgemäß durch die im Patentanspruch 1 angegebenen Merkmale gelöst.

Weitere Ausgestaltungen der Erfindung ergeben sich aus den Unteransprüchen.

Durch die Erfindung wird eine Abdeckhaube geschaffen, bei welcher wenigstens zwischen zwei Abdeckhaubeneinheiten relativ zueinander verschiebbare Haubenhälften vorgesehen sind, derart, daß zumindest eine der beiden Haubenhälften gegenüber der anderen Haubenhälfte so verlagert werden kann, daß eine Inspektionsöffnung mit praktisch beliebiger Höhe geschaffen werden kann.

Die beiden Haubenhälften müssen dabei nicht exakt einem Viertel des Kreisumfangs entsprechen, d.h. sie können etwas größere Länge haben, so daß bei geschlossener Inspektionsöffnung ein im Scheitelbereich überlappender Abschnitt vorhanden ist, andernfalls kann wenigstens eine der Haubenhälften kleinere Länge als einem Viertel des Kreisumfanges entsprechend haben, so daß eine vollständige Verschließung der Inspektionsöffnung nicht möglich ist.

Gemäß einer vorteilhaften Ausgestaltung der Erfindung ist vorgesehen, daß über die zueinander relativ verschiebbaren Haubenhälften Spannbänder geführt sind, die seitlich und unterhalb der Abdeckhauben gegenüber dem die Abdeckhauben tragenden Rahmen 1 durch Klemmeinrichtungen befestigt sind. Auf diese Weise werden die zueinander verlagerbaren Haubenhälften durch die durch die Klemmeinrichtungen gespannten Spannbänder mit einer solchen Reibungskraft gehalten, daß die beiden Haubenhälften zueinander verlagerbar sind, wobei die Spannbänder so weit gespannt werden, daß die Haubenhälften zueinander verschiebbar sind.

Gemäß einer weiteren Ausführungsform der Erfindung ist vorgesehen, daß beide Haubenhälften so weit in Richtung des Scheitels nach oben öffnungsfähig sind, daß auf beiden Seiten eine Inspektionsöffnung vorgegebener Breite gebildet wird.

Die Breite der Haubenhälften ist vorzugsweise derart gewählt, daß sie etwas größer ist als die Breite der Inspektionsöffnung, wodurch die benachbarten Haubeneinheiten teilweise überlappt werden.

Im folgenden wird eine bevorzugte Ausführungsform der erfindungsgemäßen Abdeckhaube anhand der Zeichnung beschrieben. Es zeigen:
- Figur 1: eine bekannte Abdeckhaube mit mehreren Inspektionsöffnungen (Stand der Technik),
- Figur 2: eine Seitenansicht einer erfindungsgemäßen Abdeckhaube, und
- Figur 3: eine Schnittdarstellung entsprechend der Linie 3 - 3' in Figur 2 durch zwei relativ zueinander bewegbare Haubenhälften.

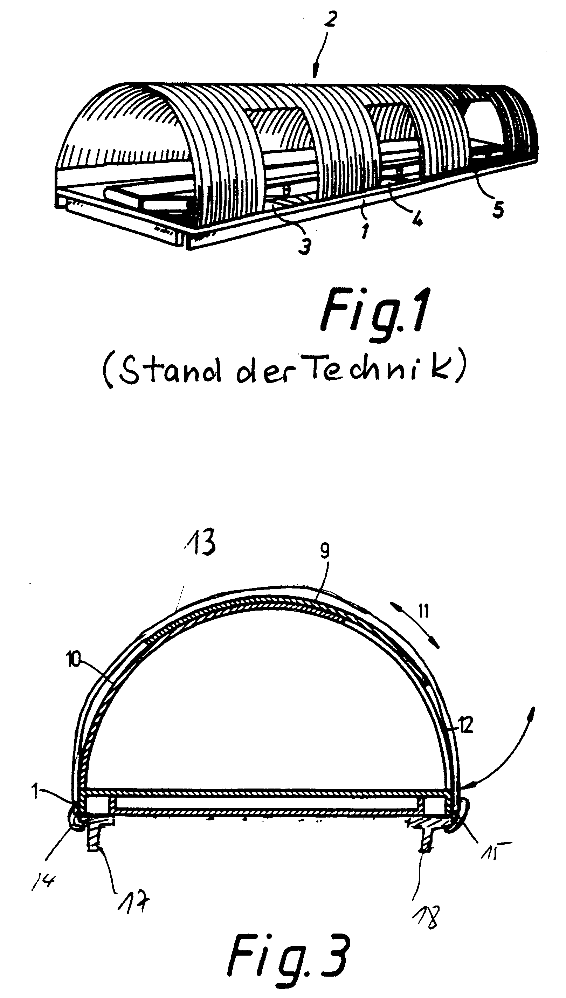

Figur 1 zeigt in perspektivischer Ansicht eine Abdeckhaube, insbesondere für ein Förderband, bei der die Haube aus einem tunnelartigen Gebilde aus Stahlwellblech besteht, wobei einzelne Stahlwellblecheinheiten hintereinander liegend vorgesehen sind und in üblicher Weise gegenüber einem Rahmen oder einer Schiene befestigt sind. Die Schiene zur Lagerung der Abdeckhaube ist in Figur 1 mit 1 bezeichnet. Die Abdeckhaube insgesamt ist in Figur 1 mit 2 angegeben. An vorgegebenen Positionen sind bei dieser Abdeckhaube Einschnitte zur Festlegung von Inspektionsöffnungen 3, 4, 5 vorgesehen, was bedeutet, daß die vorgefertigten Abdeckhauben oder Abdeckhaubeneinheiten ausgeschnitten werden müssen oder bereits in der Vorfertigung entsprechende Ausschnitte vorzuziehen sind, um dann an der jeweils gewünschten Position entlang der Förderrichtung des Förderbandes plaziert werden zu können.

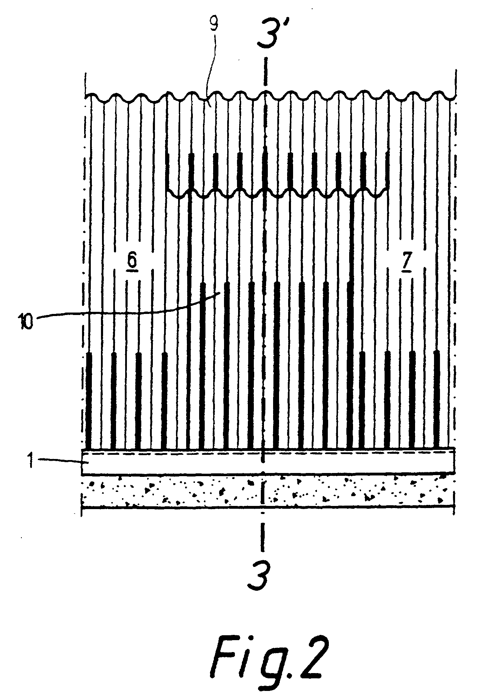

Figur 2 zeigt eine Abdeckhaube gemäß vorliegender Erfindung in Teilansicht. Die Abdeckhaube weist zwei halbkreisförmige Abdeckhaubeneinheiten 6, 7 auf, die gegenüber einer tragenden Konstruktion in Form eines Rahmens oder dergleichen, der mit 1 bezeichnet ist, befestigt sind, vorzugsweise durch ein Spannband mit Klemmeinrichtung, wie sie in dem DE 297 110 376 U1 beschrieben ist. Hinsichtlich von Einzelheiten wird auf diese Anmeldung verwiesen.

Zwischen den beiden Haubeneinheiten 6, 7 ist ein Zwischenraum bzw. Abstand festgelegt, der durch zwei in Figur 2 mit 9 und 10 bezeichnete Haubenhälften abgeschlossen wird oder abgeschlossen werden kann. Figur 3 zeigt eine Schnittansicht entlang der Linie 3 - 3' in Figur 2 zur Veranschaulichung der Anordnung der zwei gegeneinander verschiebbaren Haubenhälften 9 und 10, wobei bei der in Figur 3 gezeigten Ausführungsform die Haubenhälfte 10 stationär vorgesehen ist, während die Haubenhälfte 9 gegenüber der Haubenhälfte 10 relativ und entlang des durch die Haubenhälften 9, 10 definierten Kreisbogens verlagerbar ist. Die Verlagerung ist durch den Pfeil 11 dargestellt.

Gemäß den Figuren 2 und 3 wird durch komplette Haubeneinheiten 6, 7, die im Querschnitt betrachtet jeweils etwa einen Halbkreis festlegen, ein zwischen diesen Haubeneinheiten 6, 7 befindlicher Zwischenraum definiert, der zur Festlegung einer Inspektionsöffnung dient und zumindest teilweise je nach Anforderungen mehr oder weniger abgedeckt wird. Die Haubenhälfte 10 kann seitlich die Haubeneinheiten 6, 7 teilweise überdeckend vorgesehen sein und erstreckt sich über mindestens 90° des durch die Haubeneinheit 6, 7 definierten Halbkreises, während die Haubenhälfte 9 auf oder unter der Haubenhälfte 10 gleitend oder verlagerbar vorgesehen ist.

Die Haubenhälfte 10 kann auf die Haubeneinheiten 6, 7 seitlich aufgelegt sein, so daß die Haubenhälfte 9 wiederum oberhalb der Haubenhälfte 10 angeordnet ist und sich so weit verlagern läßt, daß eine Inspektionsöffnung mit vorgegebenem Öffnungswinkel festgelegt ist.

Zur Stabilisierung der Haubenhälfte 9 kann andererseits vorgesehen sein, daß die Haubenhälfte 9 zwischen der teilweise darüber befindlichen Haubenhälfte 10 einerseits und auf den Haubeneinheiten 6, 7 andererseits aufliegend verschoben wird, wodurch das zur Inspektionsöffnung 12 wegweisende Ende der Haubenhälfte 9 sicher geführt ist. Gemäß einer weiteren Ausführungsform der Erfindung ist über die beiden Haubenhälften 9, 10 mindestens ein Spannseil geführt, das in Fig. 3 mit 13 bezeichnet ist und das durch eine Klemmeinrichtung 14, 15 gegenüber Trägerschienen in vorbestimmtem Umfange verspannt wird. Die Trägerschienen sind in Fig. 3 mit 17, 18 bezeichnet. Gegebenenfalls können die beiden Haubenhälften 9, 10 auch durch zwei derartige Spannseile gesichert werden.

Bei der dargestellten Ausführungsform läßt sich somit eine Inspektionsöffnung sowohl auf einer Seite oder auch auf beiden Seiten gegenüber der Achse der Abdeckhauben vorsehen, wobei die beiden Abdeckhaubenhälften 9, 10 relativ zueinander verschiebbar sind. Durch die von den Spannbändern ausgeübte Reibungskraft werden die Haubenhälften 9, 10 in der jeweils gewünschten Stellung gehalten.

Die in Figur 3 gezeigte Variante, bei welcher die verstellbare Haubenhälfte 9 auf der weiteren Haubenhälfte 10 verlagerbar ist, setzt ersichtlicherweise voraus, daß entweder die Haubenhälfte 9 einen Bogen überspannt, der größer ist als 90°, wodurch aufgrund der Schwerkraft die Haubenhälfte 9 unabhängig von der Größe des Öffnungswinkels 12 sicher auf der Haubenhälfte 10 aufliegt. Alternativ hierzu können spezielle Führungsschienen an der Haubenhälfte 10 vorgesehen sein, um die Haubenhälfte 9 sicher an der Haubenhälfte 10 zu führen. Aus der Darstellung nach Figur 2 geht hervor, daß die Haubenhälfte 9 unterhalb der Haubenhälfte 10, aber oberhalb der Haubeneinheiten 6, 7 geführt ist.

Die einfachste und konstruktiv am wenigsten aufwendige Lösung besteht darin, daß nach dem Plazieren der Abdeckhaubeneinheiten 6, 7 zuerst die verstellbare Haubenhälfte 9 unter Einhaltung des Öffnungswinkels auf die Abdeckhaubeneinheiten 6, 7 aufgelegt wird, bevor auf der zur Inspektionsöffnung abgewandten Seite die weitere Abdeckhaubenhälfte 10 unter zumindest teilweisem Einschluß der Abdeckhaubenhälfte 9 auf diese aufgelegt wird. Die Abdeckhaubenhälfte 9, 10 haben somit eine Breite, die geringfügig größer ist als die Breite der Inspektionsöffnung. Durch die Ausbildung der Abdeckhaubeneinheiten 6, 7 und der Haubenhälften 9, 10 in Form von Stahlwellblechen wird durch die Wellung selbst eine Führung bei der Verstellung der Haubenhälfte 9 sichergestellt und ein sicheres "Einklinken" der Abdeckhaubenhälften 9, 10 gegenüber den benachbarten Abdeckhaubeneinheiten 6, 7 gewährleistet.

Die Befestigung der Abdeckhaubeneinheiten 6, 7 erfolgt vorteilhafterweise durch Spannbänder, die einfach über die Abdeckhaubeneinheiten 6, 7 herumgeführt und mit der tragenden Trägerkonstruktion verrastet werden.

Mit der erfindungsgemäßen Abdeckhaube wird sichergestellt, daß im Bereich der Inspektionsöffnungen keinerlei Schwächung der Haube eintritt. Weiterhin ist vor dem Aufbau der Haube keine Entscheidung zu treffen, ob die Inspektionsöffnung links oder rechts vorzusehen ist. Auch der Öffnungswinkel braucht im vornherein nicht festgelegt zu werden.

Die erfindungsgemäß aus Wellblech bestehenden Hauben und Haubenhälften erfordern vorteilhafterweise keine zusätzlichen oder separaten Führungseinrichtungen für die verstellbaren Haubenhälften. Durch die Wellblechstruktur wird automatisch eine Führung über den durch die Haubenachse definierten Teilkreis (siehe Fig. (11)) geschaffen.

## Patentansprüche

1. Abdeckhaube, insbesondere für Förderbänder,
bestehend aus im Querschnitt gesehen halbkreisförmigen Haubeneinheiten, die jeweils aus gewelltem Blech bzw. Stahlblech bestehen und in Serie zueinander liegend angeordnet sind,
wobei zwischen mindestens zwei Haubeneinheiten (6, 7) wenigstens zwei Haubenhälften vorgesehen sind,
wobei zumindestens eine der Haubenhälften (9) relativ zur anderen Haubenhälfte (10) zur Freigabe einer Inspektionsöffnung entlang der durch die Haubenhälften (9, 10) definierten Kreisbogens verlagerbar ist und daß jede Haubenhälfte aus gewelltem Blech bzw. Stahlblech besteht, so daß die einander zugeordneten Haubenhälften durch die Wellung des Bleches gegeneinander geführt sind.

2. Abdeckhaube nach Anspruch 1,
**dadurch gekennzeichnet,**
**daß** die zu den Haubenhälften (9, 10) benachbarten Haubeneinheiten (6, 7) durch Spannbänder gegenüber einer Tragschiene (1) oder dergleichen befestigt sind.

3. Abdeckhaube nach Anspruch 1 oder 2,
**dadurch gekennzeichnet,**
**daß** die Haubenhälften (9, 10) durch mindestens ein Spannband (13) gesichert sind.

4. Abdeckhaube nach Anspruch 3,
**dadurch gekennzeichnet,**
**daß** jedes Spannband (13) durch Klemmeinrichtungen (14, 15) gegenüber einem Rahmen (1) oder dergleichen fixiert ist.

5. Abdeckhaube nach einem der vorangehenden Ansprüche,
**dadurch gekennzeichnet,**
**daß** die Haubenhälften (9, 10) die benachbarten Haubeneinheiten (6, 7) teilweise überlappen.

6. Abdeckhaube nach einem der Ansprüche 1 bis 5,
**dadurch gekennzeichnet,**
**daß** mindestens eine der Haubenhälften (9, 10) fest mit der Tragschiene (1) oder dergleichen verbunden ist.

7. Abdeckhaube nach einem der vorangehenden Ansprüche,
**dadurch gekennzeichnet,**
**daß** jede Haubenhälfte mindestens einen Kreisbogen von 90° überspannt.

8. Abdeckhaube nach einem der vorangehenden Ansprüche,
**dadurch gekennzeichnet,**
**daß** die verschiebbare Haubenhälfte (9) seitlich auf den benachbarten Haubeneinheiten (6, 7) aufliegt und durch die zweite Haubenhälfte (10) zumindest teilweise überdeckt wird.

## Claims

1. Cove, particularly for conveyor belts,
consisting of cover units of semicircular shape, when seen in cross-section, which consist each of corrugated metal sheet or steel sheet material and are disposed in a serial arrangement relative to each other,
wherein at least two cover halves are provided between at least two cover units (6, 7),
wherein at least one of said cover halves (9) is adapted for displacement relative to the other cover half (10) for exposing an inspection opening along the arc of circle defined by said cover halves (9, 10), and each cover half consists of corrugated metal sheet or steel sheet material so that the cover halves associated with each other are guided relative to each other by the corrugation in the metal sheet.

2. Cover according to Claim 1,
**characterised in**
**that** the cover units (6, 7) adjacent to said cover halves (9, 10) are fastened by means of tensioning straps relative to a carrier rail (1) or the like.

3. Cover according to Claim 1 or 2,
**characterised in**
**that** said cover halves (9, 10) are secured by at least one tensioning strap (13).

4. Cover according to Claim 3,
**characterised in**
**that** each tensioning strap (13) is fixed by means of clamping means (14, 15) relative to a frame (1) or the like.

5. Cover according to any of the preceding Claims,
**characterised in**
**that** said cover halves (9, 10) partly overlap the adjacent cover units (6, 7).

6. Cover according to any of the Claims 1 to 5,
**characterised in**
**that** at least one of said cover halves (9, 10) is fixedly connected to said carrier rail (1) or the like.

7. Cover according to any of the preceding Claims,
**characterised in**
**that** each cover half extends over at least one arc of a circle of 90°.

8. Cover according to any of the preceding Claims,
**characterised in**
**that** said displaceable cover half (9) laterally rests on the adjacent cover units (6, 7) and is covered, at least partly, by said second cover half (10).

## Revendications

1. Capot, en particulier pour convoyeur à bande, constitué d'unités de capot semi-circulaires en coupe transversale, qui sont formées respectivement de tôle ondulée ou de tôle d'acier et sont agencées en série horizontalement l'une par rapport à l'autre,
dans lequel il est prévu au moins deux moitiés de capot entre deux unités de capot (6, 7),
dans lequel au moins une des moitiés de capot (9) peut être décalée par rapport à l'autre moitié de capot (10) pour dégager une ouverture d'inspection le long des arcs de cercle définis par les moitiés de capot et chaque moitié de capot est formé respectivement de tôle ondulée ou de tôle d'acier, de sorte que les moitiés de capot affectées l'une à l'autre soient guidées l'une par rapport à l'autre par l'ondulation de la tôle.

2. Capot selon la revendication 1, **caractérisé en ce que** les unités de capot (6, 7) adjacentes des moitiés de capot (9, 10) sont fixées par des bandes de serrage par rapport à un profilé de support (1) ou analogue.

3. Capot selon la revendication 1 ou 2, **caractérisé en ce que** les moitiés de capot (9, 10) sont fixées par au moins une bande de serrage (13).

4. Capot selon la revendication 3, **caractérisé en ce que** chaque bande de serrage (13) est fixée par des dispositifs de blocage (14, 15) par rapport à un châssis (1) ou analogue.

5. Capot selon l'une quelconque des revendications précédentes, **caractérisé en ce que** les moitiés de capot (9, 10) chevauchent partiellement les unités de capot adjacentes (6, 7).

6. Capot selon l'une quelconque des revendications 1 à 5, **caractérisé en ce qu'**au moins une des moitiés de capot (9, 10) est solidement reliée au profilé de support (1) ou analogue.

7. Capot selon l'une quelconque des revendications précédentes, **caractérisé en ce que** chaque moitié de capot couvre au moins un arc de cercle de 90°.

8. Capot selon l'une quelconque des revendications précédentes, **caractérisé en ce que** la moitié de capot déplaçable (9) s'applique latéralement sur les moitiés de capot adjacentes (6, 7) et est recouverte au moins partiellement par les moitiés de capot (10).
